# EUROPEAN PATENT SPECIFICATION

(11) **EP 3 161 391 B1**
(45) Date of publication and mention of the grant of the patent: **14.04.2021**
(21) Application number: 15739123.6
(22) Date of filing: 30.06.2015
(51) Int. Cl.: F25B 1/10, F25D 29/00, B60H 1/32

(54) **DUAL CIRCUIT TRANSPORTATION REFRIGERATION SYSTEM**
ZWEIKREIS-TRANSPORTKÜHLSYSTEM
SYSTÈME DE RÉFRIGÉRATION DE TRANSPORT À DOUBLE CIRCUIT

(30) Priority: 30.06.2014 US 201462019014 P
(43) Date of publication of application: 03.05.2017
(73) Proprietor: Carrier Corporation, Farmington, CT 06032 (US)
(72) Inventor: SAROKA, Mary D., Syracuse, New York 13221 (US); CHOPKO, Robert A., Syracuse, New York 13221 (US); BURCHILL, Jeffrey J., Syracuse, New York 13221 (US)
(74) Representative: Schmitt-Nilson Schraud Waibel Wohlfrom Patentanwälte Partnerschaft mbB
(86) International application number: PCT/US2015/038544
(87) International publication number: WO 2016/004032

(56) References cited:
- WO-A1-2013/016404
- JP-A- 2004 286 363
- US-A- 2 881 600
- US-A1- 2003 000 236

## Description

### BACKGROUND

The subject matter disclosed herein relates to refrigeration systems. More particularly, the present disclosure relates to transportation refrigeration systems.

Recently passed legislation is driving the transportation refrigeration industry, including refrigeration units for trucks, trailers, cargo containers, rail systems, and the like, toward developing products utilizing low global warming potential (GWP) refrigerants. With this come efforts to improve control of the system so that the cargo is maintained at a selected temperature to reduce adverse effects on the cargo such as spoilage or rot.

JP 2004 286363 A discloses a refrigerator car that has two mutually independently cooling rooms, and has a generator driven by a vehicular engine, a converter device for converting an alternating current generated by the generator into a direct current, refrigerating cycles respective arranged in response to the rooms, and including sealed compressors, and inverter devices for respectively driving the sealed compressors of the respective refrigerating cycles with the alternating current converted by the converter device as a power source.

US 2003/000236 A1 describes a method of powering a refrigeration system. The method includes providing a mover and an alternator, the alternator being coupled to the mover and generating a power signal. The method also includes monitoring at a control a plurality of system parameters and sending a control signal based on the system parameters from the control.

US 2 881 600 A discloses a mechanically refrigerated railway car comprising an outer envelope for said car, a bulkhead spaced from one end of the envelope to divide said envelope into a refrigeration compartment and a machine compartment, thermal insulation lining said entire refrigeration compartment, a commodity compartment situated entirely within said refrigeration compartment and spaced from the walls thereof.

WO 2013/0616404 A discloses a transport container with a refrigeration circuit having multi-stage compression, a gas cooler and an intercooler.

### BRIEF SUMMARY

According to the invention defined in appended claim 1, a refrigeration system for a refrigerated cargo container includes two or more refrigeration circuits, each refrigeration circuit configured to cool a compartment of the refrigerated cargo container. Each refrigeration circuit includes a compressor to compress a gaseous flow of refrigerant, a gas cooler in fluid communication with the compressor to cool the compressed flow of refrigerant, and an evaporator located at the compartment and in fluid communication with the gas cooler and the compressor. An electrical generator is operably connected to the compressor of each refrigeration circuit to drive the compressors and a control system operably connected to the electrical generator and the two or more refrigeration circuits. The control system is configured to calculate a maximum electrical power generated by the generator, calculate a target electrical load of the components of each refrigeration circuit, and distribute the available electrical power from the generator to meet the target electrical load of each refrigeration circuit.

According to the invention, the target electrical load for each refrigeration circuit is based on a temperature set point of each refrigeration circuit.

Additionally, in this or other embodiments the electrical generator is powered by a diesel engine.

Additionally, in this or other embodiments the refrigerant is a CO₂ refrigerant.

Additionally, in this or other embodiments a first refrigeration circuit of the two or more refrigeration circuits utilizes a first refrigerant and a second refrigeration circuit of the two or more refrigeration circuits utilizes a second refrigerant different from the first refrigerant.

According to the invention, the compressor is a multi-stage compressor.

According to the invention, the refrigeration circuit is configured to compress a flow of refrigerant at a first stage of the compressor, convey the flow of refrigerant from the compressor through the intercooler of the gas cooler to undergo thermal energy exchange, return the flow of refrigerant to the compressor from the gas cooler, compress the flow of refrigerant at a second stage of the compressor, and flow the refrigerant through the gas cooler a second time to undergo further thermal energy exchange.

Additionally, in this or other embodiments a flash tank is located along the refrigeration circuit fluidly between the gas cooler and the evaporator to separate residual gaseous refrigerant from the flow of refrigerant.

According to the invention, an electrically powered evaporator fan is located at the evaporator to induce a flow of air across the evaporator.

According to the invention, an electrically powered gas cooler fan is located at the gas cooler to induce a flow of air across the gas cooler.

In another embodiment, a refrigerated cargo container includes a container having a plurality of walls to define an enclosure, with two or more compartments defined in the container and a refrigeration system according to any of the claims 1 to 5.

Additionally, in this or other embodiments a first temperature set point of a first compartment of the two or more compartments differs from a second temperature set point of a second compartment of the two or more compartments.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG 1 is a perspective view of an embodiment of a refrigerated cargo container with multiple compartments;
FIG. 2 is a plan view of another embodiment of a refrigerated cargo compartment with multiple compartments;
FIG. 3 is a schematic view of a refrigeration system for a refrigerated cargo container having multiple refrigeration circuits; and
FIG. 4 is a perspective view of an embodiment of a refrigeration system for a refrigerated cargo container.

### DETAILED DESCRIPTION

With reference to the drawings in the appendix filed herewith, the system disclosed herein are utilized in a transportation refrigeration unit for refrigeration of a truck, trailer, cargo container or the like, hereinafter referred to as a "container".

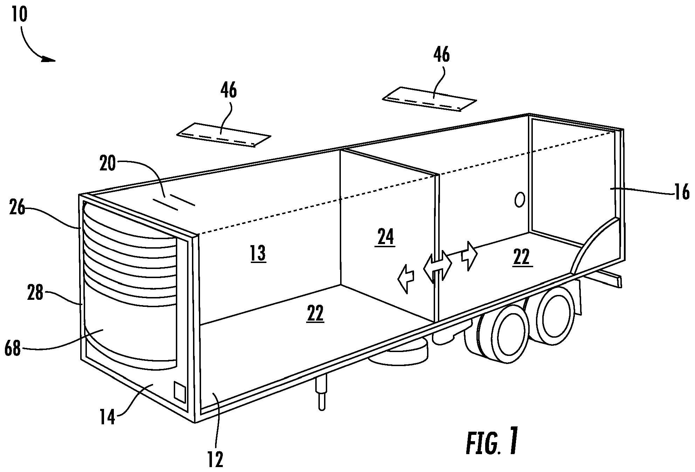

Referring to FIG. 1, a container 10 is generally a rectangular prism in shape, including a floor 12, a first or front wall 14, and a second or rear wall 16 opposite the front wall 14. The container 10 further includes opposing sidewalls 18 and a top wall 20 to enclose the volume. The sidewalls 18 and/or the rear wall 16 may include one or more doors or openings (not shown) through which cargo is loaded into and/or unloaded from the container 10.

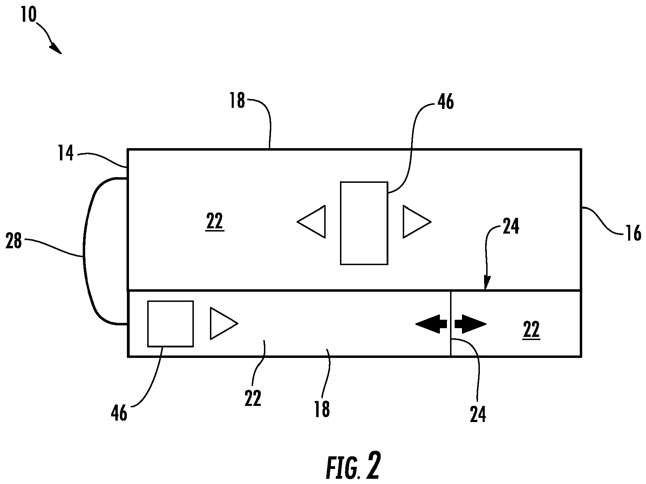

The container 10 is divided into multiple compartments 22, via arrangement of one or more interior walls 24. As shown in FIG. 1, the compartments 22 mat be arranged lengthwise in the container 10, or alternatively as shown in FIG. 2, may be arranged side-by-side or some combination of lengthwise and side-by-side. One skilled in the art will readily appreciate that other arrangements of compartments 22 may be utilized, depending on the placement of interior walls 24. For example, compartments 22 may be arranged on top of one another. Often the compartments 22 are utilized to allow for maintaining cargo or goods in the compartments 22 at different temperatures based on storage needs of the cargo.

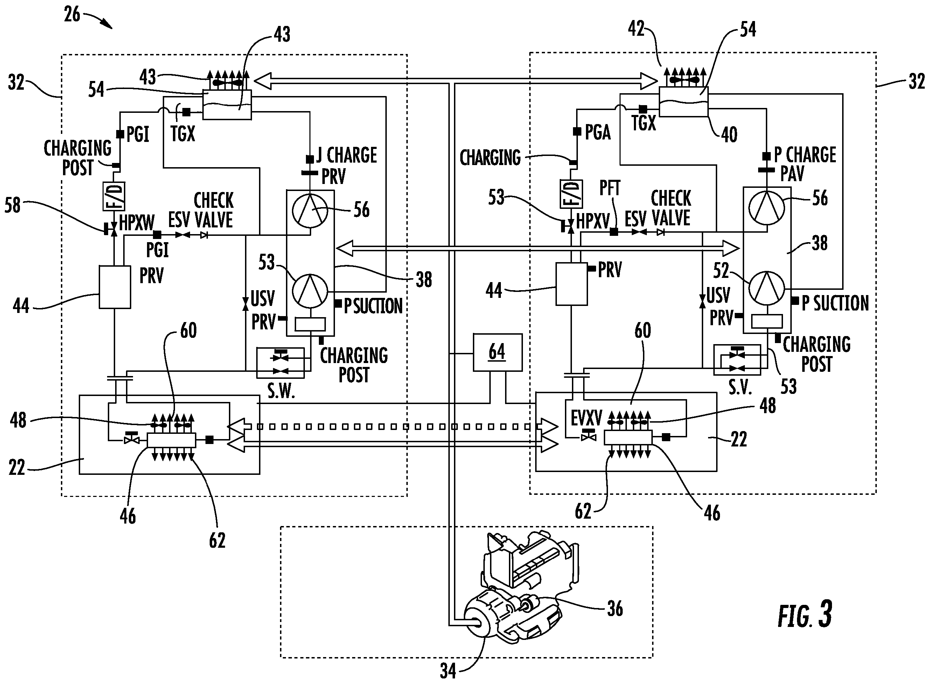

Referring again to FIG. 1, the container 10 includes a refrigeration system 26 including a transportation refrigeration unit 28 located, for example, at the front wall 14 with remote evaporators 46 connected to the refrigeration unit 28, located at each compartment 22. A schematic of a refrigeration system 26 is shown in FIG. 3. The refrigeration system 26 of FIG. 3 includes two refrigeration circuits 32, with each refrigeration circuit 32 providing cooling to one or more compartments 22. It is to be appreciated that for containers 10 having more than two compartments 22, a refrigeration system 26 with additional refrigeration circuits 32 may be utilized, for example three or four refrigeration circuits 32. In some embodiments, each refrigeration circuit 32 utilizes a low global warming potential (GWP) and/or natural refrigerant such as CO₂. Further, in some embodiments, the refrigeration circuits 32 do not include the same refrigerant, with selected refrigeration circuits 32 including different refrigerants.

The refrigeration system 26 is powered by a generator 34, which is in turn driven by a prime mover such as a diesel engine 36. The refrigeration circuits 32 of the refrigeration system 26 may be substantially identical, and as such one refrigeration circuit 32 will be described herein with the understanding that additional refrigeration circuits 32 have substantially identical structures.

A compressor 38 is operably connected to the generator 34 and driven by the generator 34. In some embodiments, such as shown in FIG. 3, the compressor 38 is a multi-stage, variable speed compressor 38. It is to be appreciated that other compressor configurations may be utilized. The refrigeration circuit 32 includes a gas cooler 40 with an electrically powered gas cooler fan 42, which is powered by the generator 34, a flash tank 44 and an evaporator 46 including an evaporator fan 48 powered by the generator 34. In some embodiments, the evaporator 46 and evaporator fan 48 are located remotely at the compartment 22 to be cooled by the refrigeration circuit 32.

In operation, a flow of refrigerant 50 enters the compressor 38 and is compressed via a first stage 52 of the compressor 38. Compressed first stage refrigerant exits the compressor 38 as a high pressure gas and is conveyed to an intercooler 54 of gas cooler 40. From the intercooler 54, the flow of refrigerant is conveyed back to the compressor 38 and is further compressed at a second stage 56 of the compressor 38. From the second stage 56, the compressed second stage refrigerant exits the compressor 38 and is conveyed to the gas cooler 40. At the gas cooler 40, a thermal energy exchange between the compressed second stage refrigerant, the compressed first stage refrigerant and ambient air urged across the gas cooler 40 by the gas cooler fan 42 results in the flow of refrigerant 50 exiting the gas cooler 40 as a reduced temperature, high pressure vapor.

From the gas cooler 40 the flow of refrigerant 50 proceeds through an expansion valve 58 and enters the flash tank 44 as a low pressure liquid. At the flash tank 44 any residual gaseous refrigerant in the flow of refrigerant 50 is separated out and directed back to the compressor 38. Liquid refrigerant in the flow of refrigerant 50 is urged from the flash tank 44 to the evaporator 46 where the evaporator fan 48 directs a flow of return air 60 across the evaporator 46. After thermal exchange between the return air 60 and the flow of refrigerant 50 at the evaporator 46, newly cooled airflow, now referred to as supply air 62 flows into the compartment 22 to cool the compartment 22 and the cargo therein. The flow of refrigerant 50 is then returned to the compressor 38, is particular the first stage 52.

In some embodiments, a gas cooler coil wraps around the gas cooler fan 42, increasing a heat-transfer surface area for greater efficiency in a configuration that is both compact and lightweight. The resulting refrigeration circuit 32 is versatile in responding to the thermodynamic properties of CO₂, providing gas cooling after each compression stage for improved efficiency. The flash tank 44 is configured to manage a flow and phase change of the flow of refrigerant 50 after leaving the gas cooler 40. For efficient cooling performance, the configuration enables separation of remaining gaseous CO₂ from liquid CO₂ before entering the evaporator 46.

A control system 64 is utilized to control operation of the diesel engine 36 and generator 34 as well as the compressors 38, gas cooler fans 42 and evaporator fans 48. The control system calculates a maximum electrical power generated by the diesel engine 36 and generator 34 and also calculates a target electrical load of the components (compressor 38, gas cooler fan 42, evaporator fan 48) for each refrigeration circuit 32 based on a temperature set point of each refrigeration circuit 32. The control system 64 distributes the available electrical power from the generator 34 to meet the target electrical load of each refrigeration circuit 32. Component controls such as variable speed, a compressor economizer and/or unloader are utilized to determine and implement a balanced power control.

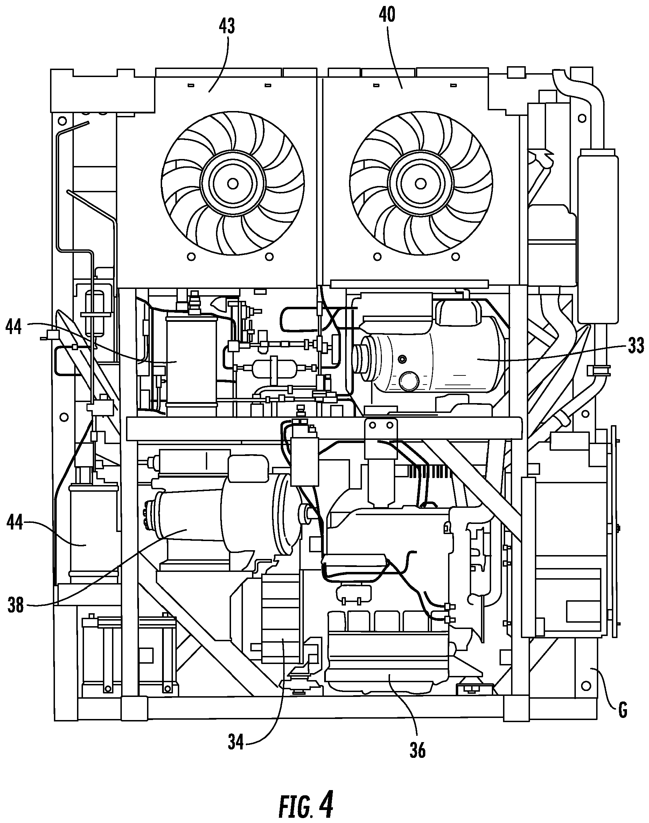

Referring now to FIG. 4, the components of refrigeration circuits 32 (compressor 38, gas cooler 40, gas cooler fan 42) and also the diesel engine 36 and generator 34 are located at in secured in a frame 66. The configuration allows for compact packaging of the components in the frame 66, which in some embodiments is located at the front wall 14 and which is, as shown in FIG. 1, enclosed by a cover 68.

Benefits of the present disclosure include, but are not limited to, operation of a refrigeration system using an environmentally friendly natural refrigerant of CO₂. Individualized refrigeration control of each compartment as opposed to typical multicompartment utilizing a single refrigeration circuit with a single compressor, which must meet the needs of all compartments while utilizing the same compressor suction setting. Further, the present system provides improved control of each refrigeration circuit based on individual compartment refrigeration requirements. The present system provides for at least partial load loss protection. In a typical multi-temperature container system, if the compressor fails, temperature control is lost in all compartments, while a compressor failure in the present system would result in the loss of temperature control in only one compartment, leaving other refrigeration circuits associated with other compartments to function normally.

While the present disclosure has been described in detail in connection with only a limited number of embodiments, it should be readily understood that the present disclosure is not limited to such disclosed embodiments. Accordingly, the present disclosure is not to be seen as limited by the foregoing description, but is only limited by the scope of the appended claims.

## Claims

1. A refrigeration system (26) for a refrigerated cargo container comprising:
two or more refrigeration circuits (32), each refrigeration circuit (32) configured to cool a separate compartment (22) of the refrigerated cargo container and each including:
a compressor (38) to compress a gaseous flow of refrigerant;
a gas cooler (40) in fluid communication with the compressor (38) to cool the compressed flow of refrigerant; and
an evaporator located at the compartment (22) and in fluid communication with the gas cooler (40) and the compressor (38);
the refrigeration system (26) including an electrical generator (34) operably connected to the compressor (38) of each refrigeration circuit (32) to drive the compressors (38);
a control system (64) operably connected to the electrical generator (34) and the two or more refrigeration circuits (32) and configured to:
calculate a maximum electrical power generated by the generator (34);
calculate a target electrical load of the components of each refrigeration circuit (32) based on a temperature set point of each of the refrigeration circuits (32);
distribute available electrical power from the generator (34) to meet the target electrical load of the components of each of the refrigeration circuits (32), the components being the compressor (38), an electrically-powered evaporator fan (48) powered by the generator (34) disposed at the evaporator to induce a flow of air across the evaporator and an electrically powered gas cooler fan (42) powered by the generator (34) disposed at the gas cooler (40) to induce a flow of air across the gas cooler (40);
and wherein the compressor (38) of each refrigeration circuit (32) is a multi-stage compressor (38) and each refrigeration circuit (32) is configured to:
compress a flow of refrigerant at a first stage of the compressor (38) outputting a compressed first stage refrigerant;
convey the compressed first stage refrigerant from the compressor (38) through an intercooler (54) of the gas cooler (40) to undergo thermal energy exchange;
return the compressed first stage refrigerant to the compressor (38) from the intercooler (54) of the gas cooler (40);
compress the compressed first stage refrigerant at a second stage of the compressor (38) outputting a compressed second stage refrigerant; and
flow the compressed second stage refrigerant through the gas cooler (40) a second time to undergo further thermal energy exchange with the compressed first stage refrigerant and ambient air urged across the gas cooler (40).

2. The refrigeration system (26) of Claim 1, wherein the electrical generator (34) is powered by a diesel engine.

3. The refrigeration system (26) of Claims 1 or 2, wherein the refrigerant is a CO₂ refrigerant.

4. The refrigeration system (26) of any of Claims 1-3, wherein a first refrigeration circuit (32) of the two or more refrigeration circuits (32) utilizes a first refrigerant and a second refrigeration circuit of the two or more refrigeration circuits utilizes a second refrigerant different from the first refrigerant.

5. The refrigeration system (26) of any of Claims 1-4, further comprising a flash tank disposed along the refrigeration circuit (32) fluidly between the gas cooler (40) and the evaporator to separate residual gaseous refrigerant from the flow of refrigerant.

6. A refrigerated cargo container comprising:
a container having a plurality of walls to define an enclosure, with two or more compartments (22) defined in the container; and
a refrigeration system (26) according to any of the preceding claims, operably connected to the container to provide cooling to the two or more compartments (22).

7. The refrigerated cargo container of Claim 6, wherein a first temperature set point of a first compartment (22) of the two or more compartments (22) differs from a second temperature set point of a second compartment (22) of the two or more compartments (22).

## Patentansprüche

1. Kühlsystem (26) für einen gekühlten Frachtcontainer, umfassend:
zwei oder mehr Kühlkreisläufe (32), wobei jeder Kühlkreislauf (32) dazu konfiguriert ist, eine separate Kühlkammer (22) des gekühlten Frachtcontainers zu kühlen und jeweils Folgendes beinhaltet:
einen Verdichter (38), um einen gasförmigen Kältemittelstrom zu komprimieren;
einen Gaskühler (40) in Fluidkommunikation mit dem Verdichter (38), um den komprimierten Kältemittelstrom zu kühlen; und
einen Verdampfer, welcher sich an der Kammer (22) befindet und in Fluidkommunikation mit dem Gaskühler (40) und dem Verdichter (38) steht;
wobei das Kühlsystem (26) einen elektrischen Generator (34) beinhaltet, der mit dem Verdichter (38) jedes Kühlkreislaufs (32) wirkverbunden ist, um die Verdichter (38) anzutreiben;
ein Steuersystem (64), welches mit dem elektrischen Generator (34) und den zwei oder mehr Kühlkreisläufen (32) wirkverbunden ist und zu Folgendem konfiguriert ist:
Berechnen eines maximalen elektrischen Stroms, der durch den Generator (34) generiert wird;
Berechnen einer elektrischen Ziellast der Komponenten jedes Kühlkreislaufs (32) basierend auf einem Temperatursollwert jedes Kühlkreislaufs (32);
Verteilen von verfügbarem elektrischen Strom von dem Generator (34), um die elektrische Ziellast der Komponenten jedes Kühlkreislaufs (32) zu erfüllen, wobei die Komponenten der Verdichter (38), ein elektrisch betriebener Verdampferventilator (48), der durch den Generator (34) mit Energie versorgt wird, der an dem Verdampfer angeordnet ist, um einen Luftstrom über den Verdampfer zu verursachen, und ein elektrisch betriebener Gaskühlerventilator (42) sind, der durch den Generator (34) mit Energie versorgt wird, der an dem Gaskühler (40) angeordnet ist, um einen Luftstrom über den Gaskühler (40) zu verursachen;
und wobei der Verdichter (38) jedes Kühlkreislaufs (32) ein mehrstufiger Verdichter (38) ist und jeder Kühlkreislauf (32) zu Folgendem konfiguriert ist:
Komprimieren eines Kältemittelstroms an einer ersten Stufe des Verdichters (38), wobei ein komprimiertes Kältemittel der ersten Stufe ausgegeben wird;
Weiterleiten des komprimierten Kältemittels der ersten Stufe von dem Verdichter (38) durch einen Zwischenkühler (54) des Gaskühlers (40), um es einem thermischen Energieaustausch zu unterziehen;
Zurückführen des komprimierten Kältemittels der ersten Stufe zu dem Verdichter (38) von dem Zwischenkühler (54) des Gaskühlers (40);
Komprimieren des komprimierten Kältemittels der ersten Stufe an einer zweiten Stufe des Verdichters (38), wobei ein komprimiertes Kältemittel der zweiten Stufe ausgegeben wird; und
Strömenlassen des komprimierten Kältemittels der zweiten Stufe durch den Gaskühler (40) zum zweiten Mal, um es einem weiteren thermischen Energieaustausch mit dem komprimierten Kältemittel der ersten Stufe und der Umgebungsluft zu unterziehen, die über den Gaskühler (40) gedrängt wird.

2. Kühlsystem (26) nach Anspruch 1, wobei der elektrische Generator (34) durch einen Dieselmotor mit Energie versorgt wird.

3. Kühlsystem (26) nach Anspruch 1 oder 2, wobei das Kältemittel ein CO₂-Kältemittel ist.

4. Kühlsystem (26) nach einem der Ansprüche 1-3, wobei ein erster Kältemittelkreislauf (32) der zwei oder mehr Kältemittelkreisläufe (32) ein erstes Kältemittel und ein zweiter Kältemittelkreislauf der zwei oder mehr Kältemittelkreisläufe ein zweites Kältemittel verwendet, das sich von dem ersten Kältemittel unterscheidet.

5. Kühlsystem (26) nach einem der Ansprüche 1-4, ferner umfassend einen Flashtank/Kondensatsammler, der entlang des Kühlkreislaufs (32) fluidisch zwischen dem Gaskühler (40) und dem Verdampfer angeordnet ist, um verbleibendes gasförmiges Kältemittel aus dem Kältemittelstrom zu separieren.

6. Gekühlter Frachtcontainer, umfassend:
einen Container, welcher eine Vielzahl von Wänden aufweist, um eine Umhausung zu definieren, mit zwei oder mehr Kammern (22), die in dem Container definiert sind; und
ein Kühlsystem (26) gemäß einem der vorstehenden Ansprüche, welches mit dem Container betriebsmäßig verbunden ist, um eine Kühlung der zwei oder mehr Kammern (22) bereitzustellen.

7. Gekühlter Frachtcontainer nach Anspruch 6, wobei sich ein erster Temperatursollwert einer ersten Kammer (22) der zwei oder mehr Kammern (22) von einem zweiten Temperatursollwert einer zweiten Kammer (22) der zwei oder mehr Kammern (22) unterscheidet.

## Revendications

1. Système de réfrigération (26) pour un conteneur de fret réfrigéré comprenant :
au moins deux circuits de réfrigération (32), chaque circuit de réfrigération (32) étant configuré pour refroidir un compartiment séparé (22) du conteneur de fret réfrigéré et comportant chacun :
un compresseur (38) pour comprimer un flux gazeux de réfrigérant ;
un refroidisseur de gaz (40) en communication fluidique avec le compresseur (38) pour refroidir le flux comprimé de réfrigérant ; et
un évaporateur situé au niveau du compartiment (22) et en communication fluidique avec le refroidisseur de gaz (40) et le compresseur (38) ;
le système de réfrigération (26) comportant un générateur électrique (34) relié de manière fonctionnelle au compresseur (38) de chaque circuit de réfrigération (32) pour entraîner les compresseurs (38) ;
un système de commande (64) relié de manière fonctionnelle au générateur électrique (34) et aux au moins deux circuits de réfrigération (32) et configuré pour :
calculer une puissance électrique maximale générée par le générateur (34) ;
calculer une charge électrique cible des composants de chaque circuit de réfrigération (32) sur la base d'un point de consigne de température de chacun des circuits de réfrigération (32) ;
distribuer l'énergie électrique disponible depuis le générateur (34) pour répondre à la charge électrique cible des composants de chacun des circuits de réfrigération (32), les composants étant le compresseur (38), un ventilateur d'évaporateur électrique (48) alimenté par le générateur (34) disposé au niveau de l'évaporateur pour induire un flux d'air à travers l'évaporateur et un ventilateur de refroidisseur de gaz électrique (42) alimenté par le générateur (34) disposé au niveau du refroidisseur de gaz (40) pour induire un flux d'air à travers le refroidisseur de gaz (40) ;
et dans lequel le compresseur (38) de chaque circuit de réfrigération (32) est un compresseur à plusieurs étages (38) et chaque circuit de réfrigération (32) est configuré pour :
comprimer un flux de réfrigérant au niveau d'un premier étage du compresseur (38) délivrant un réfrigérant de premier étage comprimé ;
transporter le réfrigérant de premier étage comprimé depuis le compresseur (38) à travers un refroidisseur intermédiaire (54) du refroidisseur de gaz (40) pour subir un échange d'énergie thermique ;
renvoyer le réfrigérant de premier étage comprimé au compresseur (38) depuis le refroidisseur intermédiaire (54) du refroidisseur de gaz (40) ;
comprimer le réfrigérant de premier étage comprimé au niveau d'un second étage de compresseur (38) délivrant un réfrigérant de second étage comprimé ; et
faire circuler le réfrigérant de second étage comprimé à travers le refroidisseur de gaz (40) une seconde fois pour subir un échange d'énergie thermique supplémentaire avec le réfrigérant de premier étage comprimé et l'air ambiant poussé à travers le refroidisseur de gaz (40).

2. Système de réfrigération (26) selon la revendication 1, dans lequel le générateur électrique (34) est alimenté par un moteur diesel.

3. Système de réfrigération (26) selon la revendication 1 ou 2, dans lequel le réfrigérant est un réfrigérant au CO₂.

4. Système de réfrigération (26) selon l'une quelconque des revendications 1 à 3, dans lequel un premier circuit de réfrigération (32) des au moins deux circuits de réfrigération (32) utilise un premier réfrigérant et un second circuit de réfrigération des au moins deux circuits de réfrigération utilise un second réfrigérant différent du premier réfrigérant.

5. Système de réfrigération (26) selon l'une quelconque des revendications 1 à 4, comprenant en outre un réservoir de détente disposé le long du circuit de réfrigération (32) de manière fluidique entre le refroidisseur de gaz (40) et l'évaporateur pour séparer un réfrigérant gazeux résiduel du flux de réfrigérant.

6. Conteneur de fret réfrigéré comprenant :
un conteneur ayant une pluralité de parois pour définir une enceinte, avec au moins deux compartiments (22) définis dans le conteneur ; et
un système de réfrigération (26) selon l'une quelconque des revendications précédentes, relié de manière fonctionnelle au conteneur pour fournir un refroidissement aux au moins deux compartiments (22).

7. Conteneur de fret réfrigéré selon la revendication 6, dans lequel un premier point de consigne de température d'un premier compartiment (22) des au moins deux compartiments (22) diffère d'un second point de consigne de température d'un second compartiment (22) des au moins deux compartiments (22).
